# EUROPÄISCHE PATENTSCHRIFT

(11) **EP 3 784 544 B1**
(45) Veröffentlichungstag und Bekanntmachung des Hinweises auf die Patenterteilung: **05.04.2023**
(21) Anmeldenummer: 19727886.4
(22) Anmeldetag: 17.05.2019
(51) Int. Cl.: B61C 17/00

(54) **SCHIENENFAHRZEUGGRUPPE**
RAIL VEHICLE GROUP
GROUPE DE VÉHICULES FERROVIAIRES

(30) Priorität: 18.06.2018 DE 102018209748
(43) Veröffentlichungstag der Anmeldung: 03.03.2021
(73) Patentinhaber: Siemens Mobility GmbH, 81739 München (DE)
(72) Erfinder: TREUTLER, Helmut, 47804 Krefeld (DE); WILHELM, Markus, 41239 Mönchengladbach (DE); KRAUSE, Martin, 47495 Rheinberg (DE)
(74) Vertreter: Siemens Patent Attorneys
(86) Internationale Anmeldenummer: PCT/EP2019/062810
(87) Internationale Veröffentlichungsnummer: WO 2019/242958

(56) Entgegenhaltungen:
- EP-A1- 1 340 662
- EP-A1- 3 100 928
- CN-Y- 201 264 607
- DE-A1-102013 202 236

## Beschreibung

Die vorliegende Erfindung betrifft eine Schienenfahrzeuggruppe gemäß dem Oberbegriff des Anspruchs 1.

Eine solche Schienenfahrzeuggruppe ist beispielsweise von den DB-Baureihen 403, 406 und 407 (ICE3) und von der CN 201 264 607 Y bekannt. Moderne Schienenfahrzeuge sind oftmals mit einer Vielzahl von Geräten bzw. Fahrzeugkomponenten ausgestattet, die verschiedene Sicherheits- und/oder Komfortfunktionalitäten sicherstellen sollen. Insbesondere bei einem Schienenfahrzeug, das zur Personenbeförderung eingesetzt wird, werden einige seiner Geräte/Fahrzeugkomponenten bevorzugt im Unterflurbereich angeordnet. Dadurch wird vermieden, dass diese Geräte/Fahrzeugkomponenten im Innenraum des Schienenfahrzeugs Platz beanspruchen, sodass zum Beispiel eine höhere Fahrgastkapazität des Schienenfahrzeugs erreicht werden kann.

Bei der Herstellung einer Schienenfahrzeuggruppe (also einer Gruppe von mehreren Schienenfahrzeugen) trägt unter anderem die Montage von Geräten/Fahrzeugkomponenten in den Unterflurbereichen der einzelnen Schienenfahrzeuge zum (Gesamt-)Herstellungsaufwand der Schienenfahrzeuggruppe bei.

Aus der DE 10 2013 202236 A1 ist ein Schienenfahrzeug mit einer elektrischen Ausrüstung bekannt, die elektrische Komponenten und zumindest eine Containereinheit aufweist, welche zur Aufnahme der elektrischen Komponenten vorgesehen ist. Die Containereinheit ist bei allen vorgesehenen Einzelwagen unterflur gleich angeordnet. Die EP 3 100 928 Al g betrifft ein Fahrzeug mit einem Tragsystem zur Anbringung einer austauschbaren Komponente an einem Unterflurbereich. Dabei kann eine Aufnahmevorrichtung schubladenartig aus dem Unterflurbereich des Fahrzeugs in einer Ausziehrichtung herausgezogen und mittels einer Einschubbewegung eingeschoben werden.

Eine Aufgabe der Erfindung ist es, eine Schienenfahrzeuggruppe gemäß dem Oberbegriff des Anspruchs 1 bereitzustellen, welche aufwandsgünstig herstellbar ist.

Diese Aufgabe wird erfindungsgemäß gelöst durch eine Schienenfahrzeuggruppe nach Anspruch 1.

Bevorzugte Ausgestaltungen der erfindungsgemäßen Schienenfahrzeuggruppe sind Gegenstand der abhängigen Patentansprüche sowie der nachfolgenden Beschreibung.

Die erfindungsgemäße Schienenfahrzeuggruppe umfasst m Schienenfahrzeuge, von denen jedes einen Unterflurbereich, n in seinem Unterflurbereich in Fahrzeuglängsrichtung hintereinander angeordnete Geräteeinheiten sowie ein erstes und ein zweites Laufwerk aufweist, wobei m und n natürliche Zahlen größer als 1 sind und bei jedem der m Schienenfahrzeuge jede seiner n Geräteeinheiten typgleich zu einer der n Geräteeinheiten jedes anderen der m Schienenfahrzeuge ist. Außerdem ist bei der erfindungsgemäßen Schienenfahrzeuggruppe vorgesehen, dass für alle i von 1 bis n
- bei jedem der m Schienenfahrzeuge die in Fahrzeuglängsrichtung i-te seiner n Geräteeinheiten typgleich zur in Fahrzeuglängsrichtung i-ten der n Geräteeinheiten jedes anderen der m Schienenfahrzeuge ist,
- bei jedem der m Schienenfahrzeuge die in Fahrzeuglängsrichtung i-te seiner n Geräteeinheiten einen vorgegebenen Abstand zu dessen erstem Laufwerk aufweist, wobei der Abstand, den die in Fahrzeuglängsrichtung i-te Geräteeinheit des jeweiligen Schienenfahrzeugs zu dessen erstem Laufwerk aufweist, bei allen m Schienenfahrzeugen gleich ist, und
- der Unterflurbereich des jeweiligen Schienenfahrzeugs einen Teilbereich zur individuellen Ausrüstung mit Fahrzeugkomponenten aufweist, wobei bei dem Triebwagen in dessen individuell ausrüstbarem Teilbereich andere Fahrzeugkomponenten angeordnet sind als bei dem Laufwagen,
wobei i eine natürliche Zahl ist und bei jedem der m Schienenfahrzeuge die Fahrzeuglängsrichtung von seinem ersten Laufwerk zu seinem zweiten Laufwerk orientiert ist.

Das heißt, die Reihenfolge, in der die n Geräteeinheiten des jeweiligen Schienenfahrzeugs in Fahrzeuglängsrichtung angeordnet sind, sowie deren Positionen (bezüglich des ersten Laufwerks) sind bei allen m Schienenfahrzeugen der Schienenfahrzeuggruppe einheitlich. Mit anderen Worten, die Erfindung sieht bei allen Schienenfahrzeugen der Schienenfahrzeuggruppe eine standardisierte Anordnung der bei allen m Schienenfahrzeugen vorhandenen Geräteeinheiten vor.

Dadurch ist es insbesondere möglich, für die Montage der jeweiligen in Fahrzeuglängsrichtung i-ten Geräteeinheit bei allen m Schienenfahrzeugen der Schienenfahrzeuggruppe gleiche Montageverfahren, gleiches Montagewerkzeug und gleiche Befestigungsmittel zu verwenden. Folglich kann die mechanische Anbindung der jeweiligen in Fahrzeuglängsrichtung i-ten Geräteeinheit an den zugehörigen Wagenkasten bei allen m Schienenfahrzeugen der Schienenfahrzeuggruppe standardisiert ausgeführt sein/werden. Die Standardisierung bzw. Vereinheitlichung der Anordnung der Geräteeinheiten führt also zu einer Reduktion des (Gesamt-)Herstellungsaufwands der Schienenfahrzeuggruppe.

Weisen zumindest einige der Schienenfahrzeuge der Schienenfahrzeuggruppe jeweils eine Bodenwanne auf, welche den Unterflurbereich des jeweiligen Schienenfahrzeugs in Fahrzeugbreitenrichtung begrenzt, ermöglicht die standardisierte Anordnung der Geräteeinheiten bei diesen Schienenfahrzeuge außerdem eine einheitliche bzw. standardisierte Ausgestaltung und Anordnung von Bodenwannen-Seitenklappen (für die Wartung der Geräteeinheiten).

Darüber hinaus erleichtert die standardisierte Anordnung der Geräteeinheiten die Wartung der Geräteeinheiten bzw. gegebenenfalls darin angeordneter Komponenten, da durch die standardisierte Anordnung der Geräteeinheiten die zu wartenden Geräteeinheiten bzw. Komponenten für Wartungspersonal leichter aufzufinden sind und bei allen m Schienenfahrzeugen der Schienenfahrzeuggruppe die jeweils in Fahrzeuglängsrichtung i-te Geräteeinheit in gleicher Weise zugänglich ist.

Ferner kann durch die standardisierte Anordnung der Geräteeinheiten bei allen Schienenfahrzeugen der Schienenfahrzeuggruppe eine einheitliche Verkabelung für die Geräteeinheiten - insbesondere im Hinblick auf die Kabellänge - realisiert werden.

Vorzugsweise ist n gleich drei oder größer als drei. Das heißt, jedes der Schienenfahrzeuge der Schienenfahrzeuggruppe kann in seinem Unterflurbereich drei oder mehr in Fahrzeuglängsrichtung hintereinander angeordnete Geräteeinheiten aufweisen, die auch bei jedem der anderen Schienenfahrzeuge der Schienenfahrzeuggruppe vorhanden sind, und zwar in den gleichen Positionen bezüglich des jeweiligen ersten Laufwerks. Insbesondere kann n gleich vier oder fünf sein.

Das Merkmal, dass die Geräteeinheiten des jeweiligen Schienenfahrzeugs in Fahrzeuglängsrichtung hintereinander angeordnet sind, schließt nicht aus, dass bei dem jeweiligen Schienenfahrzeug zwischen zweien seiner Geräteeinheiten mindestens eine Fahrzeugkomponente angeordnet sein kann, die nur bei einem oder einigen der Schienenfahrzeuge vorhanden ist.

Die jeweilige Geräteeinheit kann ein einziges Gerät sein oder mehrere (gleiche oder unterschiedliche) Geräte umfassen. Mit anderen Worten, die jeweilige Geräteeinheit kann ein einzelnes Gerät oder eine Gruppe von mindestens zwei (gleichen oder unterschiedlichen) Geräten sein.

Im Sinne der vorliegenden Erfindung können mehrere Geräteeinheiten als typgleich zueinander aufgefasst werden, wenn diese Geräteeinheiten baugleich oder im Wesentlichen baugleich zueinander ausgebildet sind (d. h. allenfalls geringfügige strukturelle Unterschiede aufweisen).

Das jeweilige Schienenfahrzeug der Schienenfahrzeuggruppe ist vorzugsweise ein einzelner Wagen, der mit einem oder mehreren anderen Schienenfahrzeugen, insbesondere mit einem oder mehreren der anderen Schienenfahrzeuge der Schienenfahrzeuggruppe, kuppelbar ist. Ferner kann das jeweilige Schienenfahrzeug ein Laufwagen (also ein Wagen ohne eigenen Antrieb) oder Triebwagen (also ein Wagen mit eigenem Antrieb) sein.

Bei den Schienenfahrzeugen der Schienenfahrzeuggruppe handelt es sich in bevorzugter Weise um Schienenfahrzeuge zur Personenbeförderung. Die Schienenfahrzeuge der Schienenfahrzeuggruppe können zum Beispiel jeweils mindestens einen Sitzplatzbereich mit Fahrgastsitzen aufweisen.

Zweckmäßigerweise umfasst jedes der Schienenfahrzeuge der Schienenfahrzeuggruppe einen Wagenkasten mit einem Wagenkastenboden. Der Unterflurbereich des jeweiligen Schienenfahrzeugs befindet sich zweckmäßigerweise unterhalb seines Wagenkastenbodens.

Ferner umfasst der Wagenkasten des jeweiligen Schienenfahrzeugs zweckmäßigerweise eine erste Längsseitenwand sowie eine zweite Längsseitenwand. Es kann vorgesehen sein, dass für alle i von 1 bis n bei jedem der m Schienenfahrzeuge die in Fahrzeuglängsrichtung i-te seiner n Geräteeinheiten einen vorgegebenen Abstand zu dessen erster Längsseitenwand und einen vorgegebenen Abstand zu dessen zweiter Längsseitenwand aufweist. Vorzugsweise ist der Abstand, den die in Fahrzeuglängsrichtung i-te Geräteeinheit des jeweiligen Schienenfahrzeugs zu dessen erster Längsseitenwand aufweist, bei allen m Schienenfahrzeugen gleich. Weiter ist es bevorzugt, wenn der Abstand, den die in Fahrzeuglängsrichtung i-te Geräteeinheit des jeweiligen Schienenfahrzeugs zu dessen zweiter Längsseitenwand aufweist, bei allen m Schienenfahrzeugen gleich ist.

Mindestens eine der n Geräteeinheiten des jeweiligen Schienenfahrzeugs kann zum Beispiel ein Druckluftbehälter sein oder einen Druckluftbehälter umfassen. Unter einem Druckluftbehälter ist vorliegend ein Behälter zum Speichern von Druckluft zu verstehen. Insbesondere kann ein solcher Druckluftbehälter dazu vorgesehen sein, Druckluft für eine oder mehrere Luftfedern zu speichern. In letztgenanntem Fall ist der jeweilige Druckluftbehälter zweckmäßigerweise pneumatisch mit der/den zugehörigen Luftfeder(n) verbunden.

Ferner kann mindestens eine der n Geräteeinheiten des jeweiligen Schienenfahrzeugs beispielsweise ein Fortluftgerät für ein Klimatisierungssystem sein oder ein solches Fortluftgerät umfassen.

Bei einer bevorzugten Erfindungsvariante umfasst mindestens eine der n Geräteeinheiten des jeweiligen Schienenfahrzeugs sowohl einen Druckluftbehälter als auch ein Fortluftgerät.

Weiterhin kann eine der n Geräteeinheiten des jeweiligen Schienenfahrzeugs ein Gerätecontainer zur Aufnahme einer oder mehrerer elektrischer Fahrzeugkomponenten und/oder einer oder mehrerer pneumatischer Fahrzeugkomponenten sein oder einen solchen Gerätecontainer umfassen.

Vorzugsweise ist/sind bei jedem Schienenfahrzeug der Schienenfahrzeuggruppe in dessen als Gerätecontainer ausgebildeten Geräteeinheit eine oder mehrere elektrische und/oder pneumatische Fahrzeugkomponenten angeordnet.

Zu den Fahrzeugkomponenten, die in der als Gerätecontainer ausgebildeten Geräteeinheit des jeweiligen Schienenfahrzeugs angeordnet sein können, können beispielweise eine oder mehrere Fahrzeugsteuerungskomponenten, eine oder mehrere Diagnosevorrichtungen (insbesondere zum Überwachen eines Drehgestells), eine Bremssteuerung für eine elektrische Fahrzeugbremse, eine Bremssteuerung für eine pneumatische Fahrzeugbremse, ein Druckluftbehälter für die pneumatische Fahrzeugbremse, ein oder mehrere Spannungswandler, eine oder mehrere AC-Bordnetzkomponenten und/oder eine oder mehrere DC-Bordnetzkomponenten gehören. Besagte AC-Bordnetzkomponenten bzw. DC-Bordnetzkomponenten können zum Beispiel Schütze oder Leitungsschutzschalter sein/umfassen.

Darüber hinaus kann eine der n Geräteeinheiten des jeweiligen Schienenfahrzeugs ein Traggerüst für Kleinkomponenten sein oder ein Traggerüst für Kleinkomponenten umfassen.

In bevorzugter Weise ist/sind bei jedem Schienenfahrzeug der Schienenfahrzeuggruppe an dessen als Traggerüst ausgebildeten Geräteeinheit eine oder mehrere Kleinkomponenten befestigt.

Zu den Kleinkomponenten, die an der als Traggerüst ausgebildeten Geräteeinheit des jeweiligen Schienenfahrzeugs befestigt sein können, können zum Beispiel eine Branderkennungsvorrichtung, ein Koppelschütz, eine Notkupplung, eine Hauptluft-Steuerung (für eine Druckluftanlage) und/oder ein Druckluftbehälter für ein WC gehören. Wie viele und welche Kleinkomponenten bei dem jeweiligen Schienenfahrzeug an dessen als Traggerüst ausgebildeter Geräteeinheit befestigt sind, kann unter anderem vom Typ und/oder von der (Innen-)Ausstattung des jeweiligen Schienenfahrzeugs abhängen. Beispielsweise kann eine Notkupplung ausschließlich bei als Endwagen ausgebildeten Schienenfahrzeugen der Schienenfahrzeuggruppe vorgesehen sein.

Ferner kann eine der n Geräteeinheiten des jeweiligen Schienenfahrzeugs ein Abwassertank sein oder einen Abwassertank umfassen.

Es ist vorgesehen, dass der Unterflurbereich des jeweiligen Schienenfahrzeugs einen Teilbereich zur individuellen Ausrüstung mit Fahrzeugkomponenten aufweist (nachfolgend als "individuell ausrüstbarer Teilbereich" bezeichnet). In dem jeweiligen individuell ausrüstbaren Teilbereich können zum Beispiel solche Fahrzeugkomponenten angeordnet werden, die nur bei einem oder einigen der m Schienenfahrzeuge vorhanden sind, ohne dabei die Position der besagten n Geräteeinheiten des jeweiligen Schienenfahrzeugs verändern zu müssen.

Vorzugsweise befindet sich der individuell ausrüstbare Teilbereich des jeweiligen Schienenfahrzeugs zwischen dessen beiden Laufwerken. Insbesondere kann der individuell ausrüstbare Teilbereich des jeweiligen Schienenfahrzeugs zwischen zwei der n Geräteeinheiten des jeweiligen Schienenfahrzeugs angeordnet sein.

In bevorzugter Weise ist/sind bei jedem Schienenfahrzeug der Schienenfahrzeuggruppe in dessen individuell ausrüstbarem Teilbereich eine oder mehrere Fahrzeugkomponenten angeordnet. Bei mindestens einem der Schienenfahrzeuge der Schienenfahrzeuggruppe sind in dessen individuell ausrüstbarem Teilbereich andere Fahrzeugkomponenten angeordnet als bei den anderen Schienenfahrzeugen der Schienenfahrzeuggruppe.

Zu den Fahrzeugkomponenten, die im individuell ausrüstbaren Teilbereich des jeweiligen Schienenfahrzeugs angeordnet sein können, können zum Beispiel eine oder mehrere Traktionskomponenten (insbesondere ein Transformator, ein oder mehrere Traktionsstromrichter und/oder eine Batterie), eine oder mehrere Galleykomponenten, ein Bordnetzumrichter und/oder eine Vorrichtung zur Drucklufterzeugung gehören. Wie viele und welche Fahrzeugkomponenten bei dem jeweiligen Schienenfahrzeug in dessen individuell ausrüstbarem Teilbereich angeordnet sind, kann unter anderem vom Typ des jeweiligen Schienenfahrzeugs und/oder von dessen (Innen-)Ausstattung abhängen. Bei einem Triebwagen in dessen individuell ausrüstbarem Teilbereich sind andere Fahrzeugkomponenten angeordnet als bei einem Laufwagen.

Weiter ist es vorteilhaft, wenn die n Geräteeinheiten des jeweiligen Schienenfahrzeugs zwischen dessen beiden Laufwerken angeordnet sind. Alternativ kann mindestens eine der n Geräteeinheiten des jeweiligen Schienenfahrzeugs an einem seiner beiden Fahrzeugenden (d. h. in Fahrzeuglängsrichtung vor dem ersten Laufwerk oder in Fahrzeuglängsrichtung hinter dem zweiten Laufwerk) angeordnet sein.

Zweckmäßigerweise sind die Laufwerke des jeweiligen Schienenfahrzeugs jeweils als Drehgestell ausgebildet.

In einer bevorzugten Ausführungsvariante der Erfindung ist vorgesehen, dass mindestens eines der m Schienenfahrzeuge ein Mittelwagen ist und mindestens eines der m Schienenfahrzeuge ein Endwagen ist.

Des Weiteren kann vorgesehen sein, dass mindestens eines der m Schienenfahrzeuge ein Triebwagen ist und mindestens eines der m Schienenfahrzeuge ein Laufwagen ist.

Ferner können die m Schienenfahrzeuge miteinander gekuppelt sein, sodass die Schienenfahrzeuge zusammen einen Schienenfahrzeugverbund bilden.

Die bisher gegebene Beschreibung bevorzugter Ausgestaltungen der Erfindung enthält zahlreiche Merkmale, die in den einzelnen abhängigen Patentansprüchen teilweise zu mehreren zusammengefasst wiedergegeben sind. Diese Merkmale können jedoch auch einzeln betrachtet und zu sinnvollen weiteren Kombinationen zusammengefasst werden. Insbesondere sind diese Merkmale jeweils einzeln und in beliebiger geeigneter Kombination mit der erfindungsgemäßen Schienenfahrzeuggruppe kombinierbar.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit den Figuren näher erläutert werden. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden, solange der resultierende Gegenstand zum Schutzumfang gehört, der durch die Ansprüche definiert ist.

Es zeigen:
- FIG 1: ein erstes Ausführungsbeispiel einer erfindungsgemäßen Schienenfahrzeuggruppe;
- FIG 2: ein zweites Ausführungsbeispiel einer erfindungsgemäßen Schienenfahrzeuggruppe;
- FIG 3: ein drittes Ausführungsbeispiel einer erfindungsgemäßen Schienenfahrzeuggruppe.

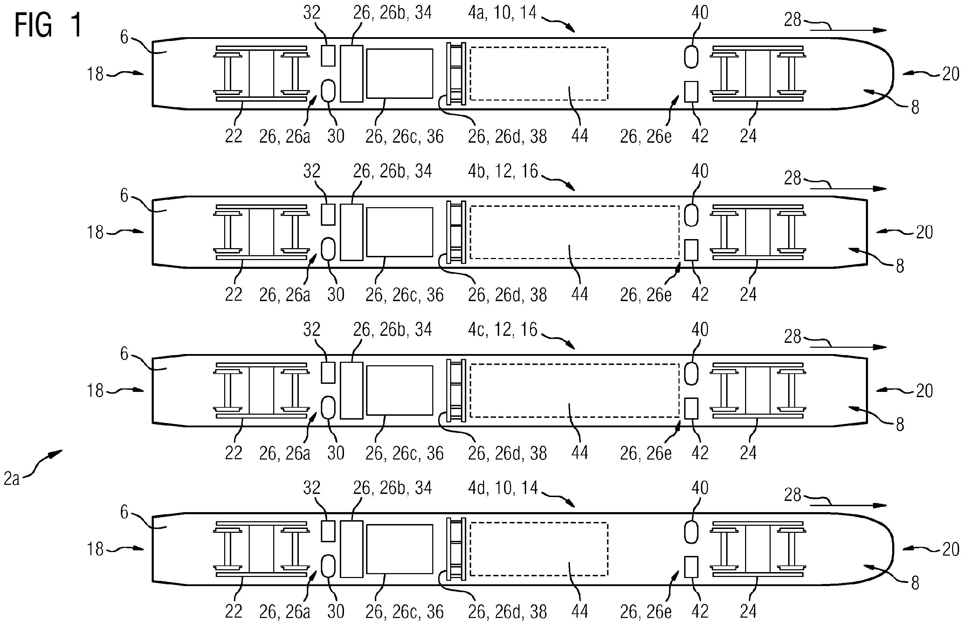

FIG 1 zeigt eine erste Schienenfahrzeuggruppe 2a, die mehrere Schienenfahrzeuge zur Personenbeförderung umfasst, von denen in FIG 1 exemplarisch ein erstes Schienenfahrzeug 4a, ein zweites Schienenfahrzeug 4b, ein drittes Schienenfahrzeug 4c sowie ein viertes Schienenfahrzeug 4d abgebildet sind.

Grundsätzlich kann die Schienenfahrzeuggruppe 2a ein oder mehrere weitere (figürlich nicht dargestellte) Schienenfahrzeuge umfassen. Der Einfachheit halber beschränkt sich die nachfolgende Beschreibung des vorliegenden Ausführungsbeispiels auf die vier genannten Schienenfahrzeuge 4a-4d der Schienenfahrzeuggruppe 2a.

In FIG 1 sind die genannten Schienenfahrzeuge 4a-4d jeweils von unten dargestellt sind, wobei von jedem der Schienenfahrzeuge 4a-4d dessen Wagenkastenboden 6 und dessen Unterflurbereich 8 sichtbar sind. Der Wagenkastenboden 6 des jeweiligen Schienenfahrzeugs 4a-4d begrenzt dessen Unterflurbereich 8 nach oben.

Bei dem ersten und dem vierten Schienenfahrzeug 4a, 4d handelt es sich jeweils um einen Endwagen 10, wohingegen das zweite und das dritte Schienenfahrzeug 4b, 4c jeweils als Mittelwagen 12 ausgebildet sind.

Im vorliegenden Ausführungsbeispiel sind das erste und das vierte Schienenfahrzeug 4a, 4d zudem jeweils als Triebwagen 14 ausgebildet, während das zweite und das dritte Schienenfahrzeug 4b, 4c jeweils als Laufwagen 16 ausgebildet sind. Alternativ können beispielsweise das erste und das vierte Schienenfahrzeug 4a, 4d jeweils als Laufwagen und das zweite und das dritte Schienenfahrzeug 4b, 4c jeweils als Triebwagen ausgebildet sein.

Die Schienenfahrzeuge 4a-4d der Schienenfahrzeuggruppe 2a weisen jeweils ein erstes Fahrzeugende 18 und ein zweites Fahrzeugende 20 auf. Außerdem weist jedes der Schienenfahrzeuge 4a-4d ein erstes Laufwerk 22 sowie ein zweites Laufwerk 24 auf. Das erste Laufwerk 22 des jeweiligen Schienenfahrzeugs 4a-4d ist näher an dessen erstem Fahrzeugende 18 als an dessen zweitem Fahrzeugende 20 angeordnet, wohingegen das zweite Laufwerk 24 des jeweiligen Schienenfahrzeugs 4a-4d näher an dessen zweiten Fahrzeugende 20 als an dessen erstem Fahrzeugende 18 angeordnet ist. Ferner sind die Laufwerke 22, 24 jeweils als Drehgestell ausgebildet.

Jedes Schienenfahrzeug 4a-4d der Schienenfahrzeuggruppe 2a weist in seinem Unterflurbereich 8 zwischen seinen beiden Laufwerken 22, 24 fünf Geräteeinheiten 26 auf, die auch bei jedem der anderen Schienenfahrzeuge 4a-4d der Schienenfahrzeuggruppe 2a in dessen Unterflurbereich 8 vorhanden sind. Bei jedem Schienenfahrzeug 4a-4d der Schienenfahrzeuggruppe 2a sind diese Geräteeinheiten 26 in Fahrzeuglängsrichtung 28, also in Richtung vom ersten Fahrzeugende 18 zum zweiten Fahrzeugende 20, hintereinander angeordnet. Das heißt, besagte fünf Geräteeinheiten 26 des jeweiligen Schienenfahrzeugs 4a-4d umfassen eine in Fahrzeuglängsrichtung 28 erste Geräteeinheit 26a, eine in Fahrzeuglängsrichtung 28 zweite Geräteeinheit 26b, eine in Fahrzeuglängsrichtung 28 dritte Geräteeinheit 26c, eine in Fahrzeuglängsrichtung 28 vierte Geräteeinheit 26d sowie eine in Fahrzeuglängsrichtung 28 fünfte Geräteeinheit 26e.

Bei jedem der Schienenfahrzeuge 4a-4d umfasst seine in Fahrzeuglängsrichtung 28 erste Geräteeinheit 26a einen Druckluftbehälter 30 zum Speichern von Druckluft für (figürlich nicht dargestellte) Luftfedern des ersten Laufwerks 22 sowie ein Fortluftgerät 32 für ein Klimatisierungssystem, wobei der Druckluftbehälter 30 und das Fortluftgerät 32 senkrecht zur Fahrzeuglängsrichtung 28 nebeneinander angeordnet sind.

Die in Fahrzeuglängsrichtung 28 zweite Geräteeinheit 26b des jeweiligen Schienenfahrzeugs 4a-4d ist im vorliegenden Ausführungsbeispiel ein Abwassertank 34.

Des Weiteren ist die in Fahrzeuglängsrichtung 28 dritte Geräteeinheit 26c des jeweiligen Schienenfahrzeugs 4a-4d ein Gerätecontainer 36 zur Aufnahme von elektrischen und/oder pneumatischen Fahrzeugkomponenten. In der als Gerätecontainer 36 ausgebildeten Geräteeinheit 26c des jeweiligen Schienenfahrzeugs 4a-4d sind elektrische und pneumatische Fahrzeugkomponenten, wie zum Beispiel Fahrzeugsteuerungskomponenten, Diagnosevorrichtungen, eine Bremssteuerung für eine elektrische Fahrzeugbremse, eine Bremssteuerung für eine pneumatische Fahrzeugbremse, ein Druckluftbehälter für die pneumatische Fahrzeugbremse, ein Spannungswandler, AC-Bordnetzkomponenten und/oder DC-Bordnetzkomponenten, angeordnet.

Die in Fahrzeuglängsrichtung 28 vierte Geräteeinheit 26d des jeweiligen Schienenfahrzeugs 4a-4d ist ein Traggerüst 38 für Kleinkomponenten. An der als Traggerüst 38 ausgebildeten Geräteeinheit 26d des jeweiligen Schienenfahrzeugs 4a-4d sind mehrere (figürlich nicht dargestellte) Kleinkomponenten, wie zum Beispiel eine Branderkennungsvorrichtung, ein Koppelschütz, eine Notkupplung, eine Hauptluft-Steuerung für eine Druckluftanlage und/oder ein Druckluftbehälter für ein WC, angeordnet. Wie viele und welche Kleinkomponenten bei dem jeweiligen Schienenfahrzeug 4a-4d an seiner als Traggerüst 38 ausgebildeten Geräteeinheit 26d befestigt sind, kann von Schienenfahrzeug 4a-4d zu Schienenfahrzeug 4a-4d verschieden sein.

Weiterhin umfasst bei jedem der Schienenfahrzeuge 4a-4d seine in Fahrzeuglängsrichtung 28 fünfte Geräteeinheit 26e einen weiteren Druckluftbehälter 40 zum Speichern von Druckluft für (figürlich nicht dargestellte) Luftfedern des zweiten Laufwerks 24 sowie ein weiteres Fortluftgerät 42 für das zuvor erwähnte Klimatisierungssystem, wobei der weitere Druckluftbehälter 40 und das weitere Fortluftgerät 42 senkrecht zur Fahrzeuglängsrichtung 28 nebeneinander angeordnet sind.

Außerdem umfasst der Unterflurbereich 8 eines jeden Schienenfahrzeugs 4a-4d der Schienenfahrzeuggruppe 2a einen individuell ausrüstbaren Teilbereich 44. Vorliegend befindet sich der individuell ausrüstbare Teilbereich 44 bei jedem der Schienenfahrzeuge 4a-4d exemplarisch zwischen dessen in Fahrzeuglängsrichtung 28 vierter Geräteeinheit 26d und dessen in Fahrzeuglängsrichtung 28 fünfter Geräteeinheit 26e.

In dem individuell ausrüstbaren Teilbereich 44 des jeweiligen Schienenfahrzeugs 4a-4d sind eine oder mehrere (figürlich nicht dargestellte) Fahrzeugkomponenten angeordnet. Wie viele und welche Fahrzeugkomponenten bei dem jeweiligen Schienenfahrzeug 4a-4d in dessen individuell ausrüstbarem Teilbereich 44 angeordnet sind, hängt insbesondere vom Typ des jeweiligen Schienenfahrzeugs 4a-4d ab. Zum Beispiel weisen die beiden als Triebwagen 14 ausgebildeten Schienenfahrzeuge 4a, 4d jeweils in ihrem individuell ausrüstbarem Teilbereich 44 Traktionskomponenten (beispielsweise einen Transformator, eine Batterie und/oder eine andere Traktionskomponente) auf, während die beiden als Laufwagen 16 ausgebildeten Schienenfahrzeuge 4b, 4c in ihrem individuell ausrüstbarem Teilbereich 44 keine Traktionskomponenten aufweisen.

Des Weiteren weist bei jedem Schienenfahrzeug 4a-4d der Schienenfahrzeuggruppe 2a die in Fahrzeuglängsrichtung 28 erste Geräteeinheit 26a einen vorgegebenen Abstand zu dessen erstem Laufwerk 22 auf, wobei der Abstand, den die in Fahrzeuglängsrichtung 28 erste Geräteeinheit 26a des jeweiligen Schienenfahrzeugs 4a-4d zu dessen erstem Laufwerk 22 aufweist, bei allen Schienenfahrzeugen 4a-4d der Schienenfahrzeuggruppe 2a gleich ist. Entsprechendes gilt für die in Fahrzeuglängsrichtung 28 zweite Geräteeinheit 26b, für die in Fahrzeuglängsrichtung 28 dritte Geräteeinheit 26c, für die in Fahrzeuglängsrichtung 28 vierte Geräteeinheit 26d und für die in Fahrzeuglängsrichtung 28 fünfte Geräteeinheit 26e. Mit anderen Worten, Geräteeinheiten 26a-26e gleicher Nummerierung (bezogen auf die jeweilige Fahrzeuglängsrichtung 28) sind bei allen Schienenfahrzeugen 4a-4d der Schienenfahrzeuggruppe 2a einheitlich positioniert.

Zudem sind Geräteeinheiten 26a-26e gleicher Nummerierung (bezogen auf die jeweilige Fahrzeuglängsrichtung 28) bei allen Schienenfahrzeugen 4a-4d der Schienenfahrzeuggruppe 2a mittels gleicher Befestigungsmittel am zugehörigen Wagenkastenboden 6 montiert.

In FIG 1 sind die Schienenfahrzeuge 4a-4d der Schienenfahrzeuggruppe 2a lediglich einer besseren Darstellbarkeit halber senkrecht zur jeweiligen Fahrzeuglängsrichtung 28 nebeneinander angeordnet. Die Schienenfahrzeuge 4a-4d der Schienenfahrzeuggruppe 2a können entlang der jeweiligen Fahrzeuglängsrichtung 28 hintereinander angeordnet und miteinander gekuppelt sein, sodass die Schienenfahrzeuge 4a-4d zusammen einen Schienenfahrzeugverbund bilden.

Die Beschreibungen der nachfolgenden Ausführungsbeispiele beschränken sich in erster Linie jeweils auf die Unterschiede zum Ausführungsbeispiel aus FIG 1, auf das bezüglich gleicher Merkmale und Funktionen verwiesen wird. Gleiche und/oder einander entsprechende Elemente sind, soweit zweckdienlich, mit den gleichen Bezugszeichen bezeichnet und nicht erwähnte Merkmale sind in den nachfolgenden Ausführungsbeispielen übernommen, ohne dass sie erneut beschrieben werden.

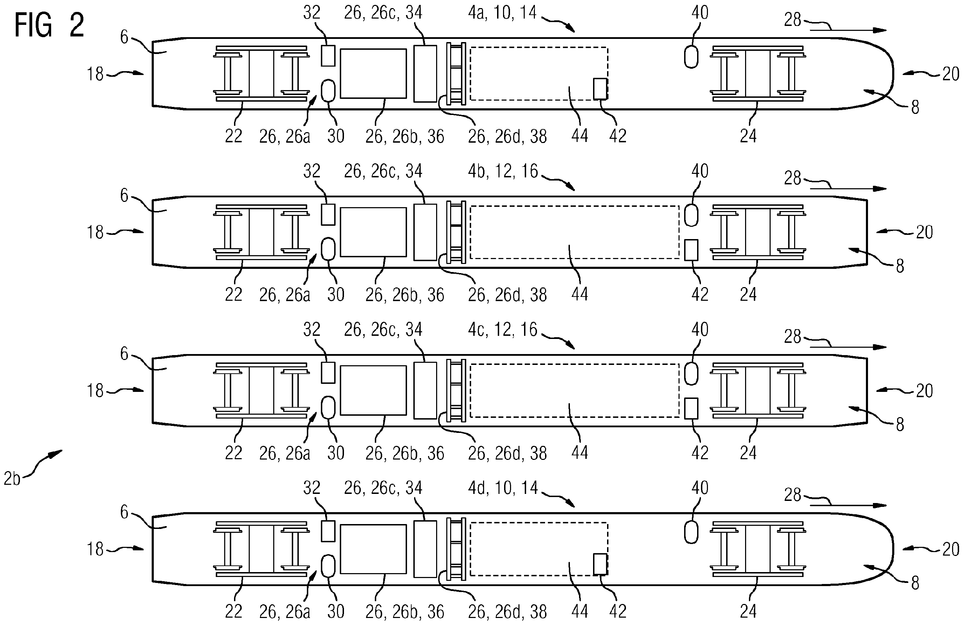

FIG 2 zeigt eine zweite Schienenfahrzeuggruppe 2b, die mehrere Schienenfahrzeuge zur Personenbeförderung umfasst, von denen in FIG 2 exemplarisch ein erstes Schienenfahrzeug 4a, ein zweites Schienenfahrzeug 4b, ein drittes Schienenfahrzeug 4c sowie ein viertes Schienenfahrzeug 4d abgebildet sind.

Jedes Schienenfahrzeug 4a-4d dieser Schienenfahrzeuggruppe 2b weist in seinem Unterflurbereich 8 zwischen seinen beiden Laufwerken 22, 24 vier Geräteeinheiten 26 auf, die auch bei jedem der anderen Schienenfahrzeuge 4a-4d der Schienenfahrzeuggruppe 2b in dessen Unterflurbereich 8 vorhanden sind. Bei jedem Schienenfahrzeug 4a-4d der Schienenfahrzeuggruppe 2b sind diese Geräteeinheiten 26 in Fahrzeuglängsrichtung 28, also in Richtung vom ersten Fahrzeugende 18 zum zweiten Fahrzeugende 20, hintereinander angeordnet. Das heißt, besagte vier Geräteeinheiten 26 des jeweiligen Schienenfahrzeugs 4a-4d umfassen eine in Fahrzeuglängsrichtung 28 erste Geräteeinheit 26a, eine in Fahrzeuglängsrichtung 28 zweite Geräteeinheit 26b, eine in Fahrzeuglängsrichtung 28 dritte Geräteeinheit 26c sowie eine in Fahrzeuglängsrichtung 28 vierte Geräteeinheit 26d.

Bei jedem der Schienenfahrzeuge 4a-4d der Schienenfahrzeuggruppe 2b umfasst seine in Fahrzeuglängsrichtung 28 erste Geräteeinheit 26a einen Druckluftbehälter 30 zum Speichern von Druckluft für (figürlich nicht dargestellte) Luftfedern des ersten Laufwerks 22 sowie ein Fortluftgerät 32 für ein Klimatisierungssystem, wobei der Druckluftbehälter 30 und das Fortluftgerät 32 senkrecht zur Fahrzeuglängsrichtung 28 nebeneinander angeordnet sind.

Die in Fahrzeuglängsrichtung 28 zweite Geräteeinheit 26b des jeweiligen Schienenfahrzeugs 4a-4d ist ein Gerätecontainer 36 zur Aufnahme von elektrischen und/oder pneumatischen Fahrzeugkomponenten.

Des Weiteren ist die in Fahrzeuglängsrichtung 28 dritte Geräteeinheit 26c des jeweiligen Schienenfahrzeugs 4a-4d im vorliegenden Ausführungsbeispiel ein Abwassertank 34.

Die in Fahrzeuglängsrichtung 28 vierte Geräteeinheit 26d des jeweiligen Schienenfahrzeugs 4a-4d ist ein Traggerüst 38 für Kleinkomponenten.

Bei jedem der Schienenfahrzeuge 4a-4d der Schienenfahrzeuggruppe 2b folgt auf die vierte Geräteeinheit 26d in Fahrzeuglängsrichtung ein individuell ausrüstbarer Teilbereich 44.

Geräteeinheiten 26a-26d gleicher Nummerierung (bezogen auf die jeweilige Fahrzeuglängsrichtung 28) sind bei allen Schienenfahrzeugen 4a-4d der Schienenfahrzeuggruppe 2b einheitlich positioniert.

Ferner weist jedes der Schienenfahrzeuge 4a-4d der Schienenfahrzeuggruppe 2b zusätzlich zu dem Druckluftbehälter 30 und dem Fortluftgerät 32 der ersten Geräteeinheit 26a einen weiteren Druckluftbehälter 40 zum Speichern von Druckluft für (figürlich nicht dargestellte) Luftfedern des zweiten Laufwerks 24 sowie ein weiteres Fortluftgerät 42 auf. Beim zweiten und dritten Schienenfahrzeug 4b, 4c sind der jeweilige weitere Druckluftbehälter 40 und das jeweilige weitere Fortluftgerät 42 senkrecht zur Fahrzeuglängsrichtung 28 nebeneinander angeordnet. Beim ersten und beim vierten Schienenfahrzeug 4a, 4d hingegen sind der jeweilige weitere Druckluftbehälter 40 und das jeweilige weitere Fortluftgerät 42 in Fahrzeuglängsrichtung 28 versetzt zueinander angeordnet, wobei bei den beiden letztgenannten Schienenfahrzeugen 4a, 4d das jeweilige weitere Fortluftgerät 42 im jeweiligen individuell ausrüstbaren Teilbereich 44 angeordnet ist.

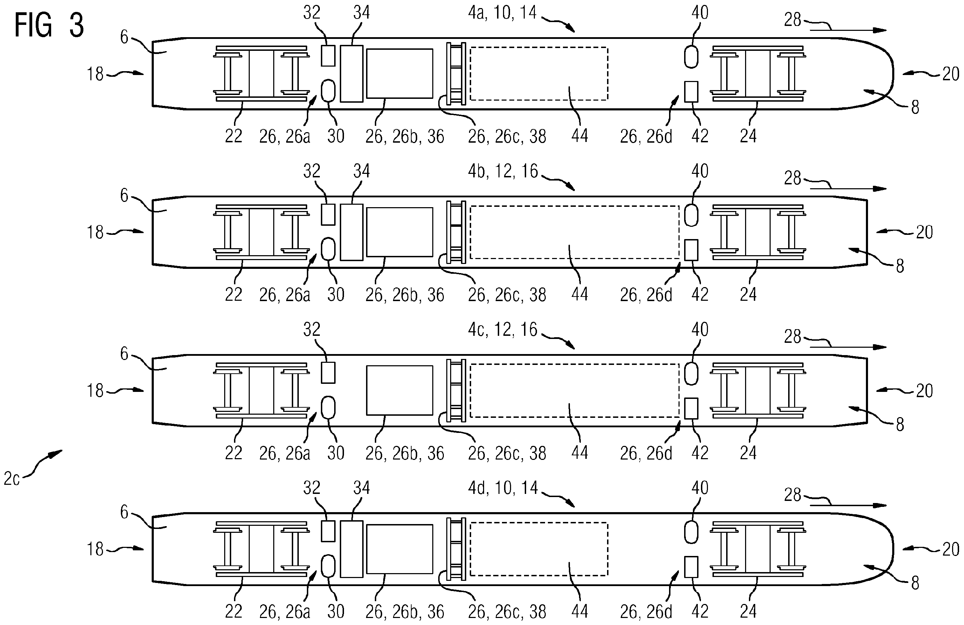

FIG 3 zeigt eine dritte Schienenfahrzeuggruppe 2c, die mehrere Schienenfahrzeuge zur Personenbeförderung umfasst, von denen in FIG 3 exemplarisch ein erstes Schienenfahrzeug 4a, ein zweites Schienenfahrzeug 4b, ein drittes Schienenfahrzeug 4c sowie ein viertes Schienenfahrzeug 4d abgebildet sind.

Jedes Schienenfahrzeug 4a-4d dieser Schienenfahrzeuggruppe 2c weist in seinem Unterflurbereich 8 zwischen seinen beiden Laufwerken 22, 24 vier Geräteeinheiten 26 auf, die auch bei jedem der anderen Schienenfahrzeuge 4a-4d der Schienenfahrzeuggruppe 2c in dessen Unterflurbereich 8 vorhanden sind. Bei jedem Schienenfahrzeug 4a-4d der Schienenfahrzeuggruppe 2c sind diese Geräteeinheiten 26 in Fahrzeuglängsrichtung 28, also in Richtung vom ersten Fahrzeugende 18 zum zweiten Fahrzeugende 20, hintereinander angeordnet. Das heißt, besagte vier Geräteeinheiten 26 des jeweiligen Schienenfahrzeugs 4a-4d umfassen eine in Fahrzeuglängsrichtung 28 erste Geräteeinheit 26a, eine in Fahrzeuglängsrichtung 28 zweite Geräteeinheit 26b, eine in Fahrzeuglängsrichtung 28 dritte Geräteeinheit 26c sowie eine in Fahrzeuglängsrichtung 28 vierte Geräteeinheit 26d.

Bei jedem der Schienenfahrzeuge 4a-4d der Schienenfahrzeuggruppe 2c umfasst seine in Fahrzeuglängsrichtung 28 erste Geräteeinheit 26a einen Druckluftbehälter 30 zum Speichern von Druckluft für (figürlich nicht dargestellte) Luftfedern des ersten Laufwerks 22 sowie ein Fortluftgerät 32 für ein Klimatisierungssystem, wobei der Druckluftbehälter 30 und das Fortluftgerät 32 senkrecht zur Fahrzeuglängsrichtung 28 nebeneinander angeordnet sind.

Die in Fahrzeuglängsrichtung 28 zweite Geräteeinheit 26b des jeweiligen Schienenfahrzeugs 4a-4d ist ein Gerätecontainer 36 zur Aufnahme von elektrischen und/oder pneumatischen Fahrzeugkomponenten.

Des Weiteren ist die in Fahrzeuglängsrichtung 28 dritte Geräteeinheit 26c des jeweiligen Schienenfahrzeugs 4a-4d im vorliegenden Ausführungsbeispiel ein Traggerüst 38 für Kleinkomponenten.

Weiterhin umfasst bei jedem der Schienenfahrzeuge 4a-4d seine in Fahrzeuglängsrichtung 28 vierte Geräteeinheit 26d einen weiteren Druckluftbehälter 40 zum Speichern von Druckluft für (figürlich nicht dargestellte) Luftfedern des zweiten Laufwerks 24 sowie ein weiteres Fortluftgerät 42 für das zuvor erwähnte Klimatisierungssystem, wobei der weitere Druckluftbehälter 40 und das weitere Fortluftgerät 42 senkrecht zur Fahrzeuglängsrichtung 28 nebeneinander angeordnet sind.

Der Unterflurbereich 8 eines jeden Schienenfahrzeugs 4a-4d der Schienenfahrzeuggruppe 2c umfasst einen individuell ausrüstbaren Teilbereich 44. Vorliegend befindet sich der individuell ausrüstbare Teilbereich 44 bei jedem der Schienenfahrzeuge 4a-4d exemplarisch zwischen dessen in Fahrzeuglängsrichtung 28 dritter Geräteeinheit 26c und dessen in Fahrzeuglängsrichtung 28 vierter Geräteeinheit 26d.

Ferner weisen das erste, zweite und vierte Schienenfahrzeug 4a, 4b, 4d der Schienenfahrzeuggruppe 2c (aber nicht das dritte Schienenfahrzeug 4c) jeweils zusätzlich einen Abwassertank 34 auf, wobei der Abwassertank 34 beim ersten, zweiten und vierten Schienenfahrzeug 4a, 4b, 4d zwischen der ersten Geräteeinheit 26a und der zweiten Geräteeinheit 26b angeordnet ist. Beim dritten Schienenfahrzeug 4c kann der Platz zwischen der ersten Geräteeinheit 26a und der zweiten Geräteeinheit 26b als zusätzlicher individuell ausrüstbarer Teilbereich genutzt werden.

Auch im Ausführungsbeispiel aus FIG 3 sind Geräteeinheiten 26a-26d gleicher Nummerierung (bezogen auf die jeweilige Fahrzeuglängsrichtung 28) bei allen Schienenfahrzeugen 4a-4d der Schienenfahrzeuggruppe 2c einheitlich positioniert.

In anderen, figürlich nicht dargestellten Ausführungsbeispielen erfindungsgemäßer Schienenfahrzeuggruppen kann bei dem jeweiligen Schienenfahrzeug - bezogen auf dessen Fahrzeuglängsrichtung - eine andere Reihenfolge von Geräteeinheiten vorgesehen sein als bei den Ausführungsbeispielen aus FIG 1 bis 3. Darüber hinaus können in anderen, figürlich nicht dargestellten Ausführungsbeispielen erfindungsgemäßer Schienenfahrzeuggruppen alternativ oder zusätzlich zu den zuvor genannten Typen von Geräteeinheiten andere Typen von Geräteeinheiten im Unterflurbereich des jeweiligen Schienenfahrzeugs vorhanden sein.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen, der durch die Ansprüche definiert ist.

## Patentansprüche

1. Schienenfahrzeuggruppe (2a, 2b, 2c), umfassend m Schienenfahrzeuge (4a-4d), von denen jedes einen Unterflurbereich (8), n in seinem Unterflurbereich (8) in Fahrzeuglängsrichtung (28) hintereinander angeordnete Geräteeinheiten (26, 26a-26e) sowie ein erstes und ein zweites Laufwerk (22, 24) aufweist, wobei m und n natürliche Zahlen größer als 1 sind und bei jedem der m Schienenfahrzeuge (4a-4d) jede seiner n Geräteeinheiten (26, 26a-26e) typgleich zu einer der n Geräteeinheiten (26, 26a-26e) jedes anderen der m Schienenfahrzeuge (4a-4d) und mindestens eines der m Schienenfahrzeuge (4a-4d) ein Triebwagen (14) ist und mindestens eines der m Schienenfahrzeuge (4a-4d) ein Laufwagen (16) ist,
**dadurch gekennzeichnet, dass**
für alle i von 1 bis n
- bei jedem der m Schienenfahrzeuge (4a-4d) die in Fahrzeuglängsrichtung (28) i-te seiner n Geräteeinheiten (26, 26a-26e) typgleich zur in Fahrzeuglängsrichtung (28) i-ten der n Geräteeinheiten (26, 26a-26e) jedes anderen der m Schienenfahrzeuge (4a-4d) ist,
- bei jedem der m Schienenfahrzeuge (4a-4d) die in Fahrzeuglängsrichtung (28) i-te seiner n Geräteeinheiten (26, 26a-26e) einen vorgegebenen Abstand zu dessen erstem Laufwerk (22) aufweist, wobei der Abstand, den die in Fahrzeuglängsrichtung (28) i-te Geräteeinheit (26, 26a-26e) des jeweiligen Schienenfahrzeugs (4a-4d) zu dessen erstem Laufwerk (22) aufweist, bei allen m Schienenfahrzeugen (4a-4d) gleich ist, und
- der Unterflurbereich (8) des jeweiligen Schienenfahrzeugs (4a-4d) einen Teilbereich (44) zur individuellen Ausrüstung mit Fahrzeugkomponenten aufweist, wobei bei dem Triebwagen (14) in dessen individuell ausrüstbarem Teilbereich andere Fahrzeugkomponenten angeordnet sind als bei dem Laufwagen (16),
wobei i eine natürliche Zahl ist und bei jedem der m Schienenfahrzeuge (4a-4d) die Fahrzeuglängsrichtung (28) von seinem ersten Laufwerk (22) zu seinem zweiten Laufwerk (24) orientiert ist.

2. Schienenfahrzeuggruppe (2a, 2b, 2c) nach Anspruch 1,
**dadurch gekennzeichnet, dass**
mindestens eine der n Geräteeinheiten (26, 26a-26e) des jeweiligen Schienenfahrzeugs (4a-4d) ein Druckluftbehälter (30, 40) ist oder einen Druckluftbehälter (30, 40) umfasst.

3. Schienenfahrzeuggruppe (2a, 2b, 2c) nach einem der voranstehenden Ansprüche,
**dadurch gekennzeichnet, dass**
eine der n Geräteeinheiten (26, 26a-26e) des jeweiligen Schienenfahrzeugs (4a-4d) ein Gerätecontainer (36) zur Aufnahme einer oder mehrerer elektrischer Fahrzeugkomponenten und/oder einer oder mehrerer pneumatischer Fahrzeugkomponenten ist oder einen solchen Gerätecontainer (36) umfasst.

4. Schienenfahrzeuggruppe (2a, 2b, 2c) nach einem der voranstehenden Ansprüche,
**dadurch gekennzeichnet, dass**
eine der n Geräteeinheiten (26, 26a-26e) des jeweiligen Schienenfahrzeugs (4a-4d) ein Traggerüst (38) für Kleinkomponenten ist oder ein Traggerüst (38) für Kleinkomponenten umfasst.

5. Schienenfahrzeuggruppe (2a, 2b, 2c) nach einem der voranstehenden Ansprüche,
**dadurch gekennzeichnet, dass**
eine der n Geräteeinheiten (26, 26a-26e) des jeweiligen Schienenfahrzeugs (4a-4d) ein Abwassertank (34) ist oder einen Abwassertank (34) umfasst.

6. Schienenfahrzeuggruppe (2a, 2b, 2c) nach einem der voranstehenden Ansprüche,
**dadurch gekennzeichnet, dass**
die n Geräteeinheiten (26, 26a-26e) des jeweiligen Schienenfahrzeugs (4a-4d) zwischen dessen beiden Laufwerken (22, 24) angeordnet sind.

7. Schienenfahrzeuggruppe (2a, 2b, 2c) nach einem der voranstehenden Ansprüche,
**dadurch gekennzeichnet, dass**
mindestens eines der m Schienenfahrzeuge (4a-4d) ein Mittelwagen (12) ist und mindestens eines der m Schienenfahrzeuge (4a-4d) ein Endwagen (10) ist.

8. Schienenfahrzeuggruppe (2a, 2b, 2c) nach einem der voranstehenden Ansprüche,
**dadurch gekennzeichnet, dass**
die m Schienenfahrzeuge (4a-4d) miteinander gekuppelt sind, sodass die Schienenfahrzeuge (4a-4d) zusammen einen Schienenfahrzeugverbund bilden.

## Claims

1. Rail vehicle group (2a, 2b, 2c), comprising m rail vehicles (4a - 4d), each of which has an underfloor region (8), n device units (26, 26a - 26e) arranged one after another in the vehicle longitudinal direction (28) in its underfloor region (8), and a first and a second set of running gear (22, 24), where m and n are natural numbers greater than 1 and, in each of the m rail vehicles (4a - 4d), each of its n device units (26, 26a - 26e) is of the same type as one of the n device units (26, 26a - 26e) of each other of the m rail vehicles (4a - 4d), and at least one of the m rail vehicles (4a - 4d) is a motor unit (14) and at least one of the m rail vehicles (4a - 4d) is a carriage (16),
**characterized in that**
for all i from 1 to n
- in each of the m rail vehicles (4a - 4d), the i^{th} of its n device units (26, 26a - 26e) in the vehicle longitudinal direction (28) is of the same type as the i^{th} of the n device units (26, 26a - 26e) in the vehicle longitudinal direction (28) of each other of the m rail vehicles (4a - 4d),
- in each of the m rail vehicles (4a - 4d), the i^{th} of its n device units (26, 26a - 26e) in the vehicle longitudinal direction (28) is at a predefined distance from its first set of running gear (22), wherein the distance of the i^{th} device unit (26, 26a - 26e) in the vehicle longitudinal direction (28) of the respective rail vehicle (4a - 4d) to its first set of running gear (22) is the same in all m rail vehicles (4a - 4d), and
- the underfloor region (8) of the respective rail vehicle (4a - 4d) has a subregion (44) for individual equipment with vehicle components, wherein, in the motor unit (14), vehicle components that are different from those in the carriage (16) are arranged in its subregion that can be equipped individually,
where i is a natural number and in each of the m rail vehicles (4a - 4d) the vehicle longitudinal direction (28) is oriented from its first set of running gear (22) towards its second set of running gear (24).

2. Rail vehicle group (2a, 2b, 2c) according to Claim 1,
**characterized in that**
at least one of the n device units (26, 26a - 26e) of the respective rail vehicle (4a - 4d) is a compressed air vessel (30, 40) or comprises a compressed air vessel (30, 40).

3. Rail vehicle group (2a, 2b, 2c) according to one of the preceding claims,
**characterized in that**
one of the n device units (26, 26a - 26e) of the respective rail vehicle (4a - 4d) is a device container (36) for accommodating one or more electric vehicle components and/or one or more pneumatic vehicle components or comprises such a device container (36) .

4. Rail vehicle group (2a, 2b, 2c) according to one of the preceding claims,
**characterized in that**
one of the n device units (26, 26a - 26e) of the respective rail vehicle (4a - 4d) is a supporting frame (38) for small components or comprises a supporting frame (38) for small components.

5. Rail vehicle group (2a, 2b, 2c) according to one of the preceding claims,
**characterized in that**
one of the n device units (26, 26a - 26e) of the respective rail vehicle (4a - 4d) is a waste-water tank (34) or comprises a waste-water tank (34).

6. Rail vehicle group (2a, 2b, 2c) according to one of the preceding claims,
**characterized in that**
the n device units (26, 26a - 26e) of the respective rail vehicle (4a - 4d) are arranged between its two sets of running gear (22, 24) .

7. Rail vehicle group (2a, 2b, 2c) according to one of the preceding claims,
**characterized in that**
at least one of the m rail vehicles (4a - 4d) is an intermediate carriage (12), and at least one of the m rail vehicles (4a - 4d) is an end carriage (10).

8. Rail vehicle group (2a, 2b, 2c) according to one of the preceding claims,
**characterized in that**
the m rail vehicles (4a - 4d) are coupled to one another, so that the rail vehicles (4a - 4d) together form a rail vehicle combination.

## Revendications

1. Groupe (2a, 2b, 2c) de véhicules ferroviaires, comprenant m véhicules (4a-4d) ferroviaires, dont chacun a une partie (8) sous la caisse, n unités (26, 26a-26e) d'appareil disposées les unes derrières les autres dans la direction (28) longitudinale du véhicule, dans sa partie (8) sous la caisse, ainsi qu'un premier et un deuxième appareil (22, 24) de roulement, m et n étant des nombres naturels plus grands que 1 et dans chacun des m véhicules (4a-4d) ferroviaires, chacune de ces m unités (26, 26a-26e) d'appareil est de même type que l'une des n unités (26, 26a-26e) d'appareil de chaque autre des m véhicules (4a-4d) ferroviaires et au moins l'un des m véhicules (4a-4d) ferroviaires est une motrice (14) et au moins l'un des m véhicules (4a-4d) ferroviaire est une voiture (16) de roulement,
**caractérisé en ce que**
pour tous les i de 1 à n
- dans chacun des m véhicules (4a-4d) ferroviaires, la ième, dans la direction (28) longitudinale du véhicule, de ses n unités (26, 26a-26e) d'appareil est de même type que la ième, dans la direction (28) longitudinale du véhicule, des n unités (26, 26a-26e) d'appareil de chaque autre des m véhicules (4a-4d) ferroviaires,
- dans chacun des m véhicules (4a-4d) ferroviaires, la ième dans la direction (28) longitudinale du véhicule, de ses n unités (26, 26a-26e) d'appareil, a une distance donnée à l'avance à son premier train (22) de roulement, dans lequel la distance k, qu'a la ième unité (26, 26a-26e) d'appareil dans la direction (28) longitudinale du véhicule (4a-4d) ferroviaire respectif, à son premier train (22) de roulement, est la même pour tous les m véhicules (4a-4d) ferroviaires, et
- la partie (8) sous la caisse du véhicule (4a-4d) ferroviaire respectif a une zone (44) partielle d'équipement individuel en composants de véhicule, dans lequel, dans la motrice (14) dans sa zone partielle pouvant être équipée individuellement, sont disposés d'autres composants de véhicule que dans la voiture (16) de roulement,
dans lequel i est un nombre naturel et dans chacun des m véhicules (4a-4d) ferroviaires, la direction (28) longitudinale du véhicule est orientée de son premier train (22) de roulement à son deuxième train (24) de roulement.

2. Groupe (2a, 2b, 2c) de véhicules ferroviaires suivant la revendication 1,
**caractérisé en ce qu'**
au moins l'une des n unités (26, 26a-26e) d'appareil du véhicule (4a-4d) ferroviaire respectif est un réservoir (30, 40) d'air comprimé ou comprend un réservoir (30, 40) d'air comprimé.

3. Groupe (2a, 2b, 2c) de véhicules ferroviaires suivant l'une des revendications précédentes,
**caractérisé en ce que**
l'une des n unités (26, 26a-26e) d'appareil du véhicule (4a-4d) ferroviaire respectif est un conteneur (36) d'appareil pour la réception d'un ou de plusieurs composants électriques de véhicule et/ou d'un ou de plusieurs composants pneumatiques de véhicule ou comprend un conteneur (36) d'appareil de ce genre.

4. Groupe (2a, 2b, 2c) de véhicules ferroviaires suivant l'une des revendications précédentes,
**caractérisé en ce que**
l'une des n unités (26, 26a-26e) d'appareil du véhicule (4a-4d) ferroviaire respectif est un support (38) de petits composants ou comprend un support (38) de petits composants.

5. Groupe (2a, 2b, 2c) de véhicules ferroviaires suivant l'une des revendications précédentes,
**caractérisé en ce que**
l'une des n unités (26, 26a-26e) d'appareil du véhicule (4a-4d) ferroviaire respectif est une cuve (34) d'eau usée ou comprend une cuve (34) d'eau usée.

6. Groupe (2a, 2b, 2c) de véhicules ferroviaires suivant l'une des revendications précédentes,
**caractérisé en ce que**
les n unités (26, 26a-26e) d'appareil du véhicule (4a-4d) ferroviaire respectif sont disposées entre ses deux trains (22, 24) de roulement.

7. Groupe (2a, 2b, 2c) de véhicules ferroviaires suivant l'une des revendications précédentes,
**caractérisé en ce qu'**
au moins l'un des m véhicules (4a-4d) ferroviaires est une voiture (12) intermédiaire et au moins l'un m véhicules (4a-4d) ferroviaires est une voiture (10) d'extrémité.

8. Groupe (2a, 2b, 2c) de véhicules ferroviaires suivant l'une des revendications précédentes,
**caractérisé en ce que**
les m véhicules (4a-4d) ferroviaires sont accouplés entre eux, de sorte que les véhicules (4a-4d) ferroviaires forment ensemble un convoi de véhicules ferroviaires.
